# EUROPEAN PATENT SPECIFICATION

(11) **EP 0 586 377 B1**
(45) Date of publication and mention of the grant of the patent: **25.02.1998**
(21) Application number: 92902260.6
(22) Date of filing: 17.12.1991
(51) Int. Cl.: B25J 9/04, B25J 9/10

(54) **MECHANISM FOR MOVEMENTS OF PREFIXED PATH, REFERABLE AS OF ELLIPTICAL SHAPE**
BEWEGUNGSMECHANISMUS MIT VORBESTIMMTER BAHN, UNTER ANDEREM ELLIPSFÖRMIG
MECANISME PERMETTANT DES MOUVEMENTS SELON UNE TRAJECTOIRE DETERMINEE, DITE DE FORME ELLIPTIQUE

(30) Priority: 21.05.1991 IT MI911392
(43) Date of publication of application: 16.03.1994
(73) Proprietor: CRIPPA, Ugo, I-22060 Sirtori (IT)
(72) Inventor: CRIPPA, Ugo, I-22060 Sirtori (IT)
(74) Representative: Adorno, Silvano
(86) International application number: PCT/IT91/00111
(87) International publication number: WO 92/20495

(56) References cited:
- EP-A- 0 008 981
- EP-A- 0 065 859
- EP-A- 0 076 947
- EP-A- 0 291 292
- WO-A-91/04138
- DE-A- 2 802 738
- FR-A- 2 593 106
- GB-A- 2 022 046
- US-A- 3 561 614
- US-A- 3 587 872
- US-A- 4 636 138

## Description

The present invention relates to a mechanism for moving articles along prefixed paths.

In many industrial systems and plants it is required that some articles are moved along a prefixed path, especially when assemblying or treating products, for example in order to transfer component parts, members and articles in general, between two predetermined positions of the system. For instance the assembled or finished products from a manufacturing line have to be moved from the final station to a transporter which carries them to the quality control, the store or the shipping department.

For the sake of simplicity, in the following reference will be expressly made to the transfer of a finished article from the assembling line (or island) to the conveying system which collects the manufactured articles (generally from various lines or islands) and transports the same to successive operating steps, although such an application is only an illustrative example, by no way limiting the possibilities of using the device according to the invention.

To this aim, according to a known solution, special transferring devices are used with an intermediate station and comprising a trolley or the like, provided with grasping means and suitable to move along a rail or guide generally extending crosswise with respect to the feed direction of the manufacturing line and/or the discharge conveyor.

Such a transferring device was found to be unsatisfactory for various reasons. First of all the device has a considerable and permanent encumbrance, due to the presence of a track, and generally requires a special construction as a consequence of the features of the system, such as the distance between manufacturing line and transferring device.

Secondly the performances of the device are rather poor. For example two grasping means (pliers or the like) are generally required, cantilevered on a support to obtain the translating motion and to place the article onto the trolley or take it therefrom , the transfer speed is low (of about 1 meter/second) and the sequence of the steps further increases the total transfer time. In addition, although the followed path (law of movement) can be theoretically programmed, in practice this is usually anti-economical and the device may result to be noisy.

The use of a true robot has also been proposed, having an arm with four degrees of freedom and a grasping means at its end. However such a solution, although allowing a reduced encumbrance and a good flexibility, both for applicability and possibilities of different paths, required to adopt a device which is undoubtedly exuberant in relation with the task to be performed, and consequently involves an inadequate use thereof, namely high costs, as separate motor means are required for each movement and each arm has its own driving motor.

From DE-A-2802738 a transferring mechanism is known with two arms, a dependent one of which is rotatably mounted at the outer end of a main arm, also rotating about its opposite end, the dependent arm being shorter than the main one. The path described by the outermost end of the second arm has a shape that is stated to vary according to the transmission ratios and the length of the arms, but is preferably restricted, according to the specification and drawings, to an oscillation along a prefixed angle or length of an alternative rectilinear non-harmonic motion. A continuous rotation of the arms over 360°, which in principle could be realised, would result, still according to the disclosure, in a polygonal path with rounded corners.

Furthermore the alternative linear motion occurs at a certain distance from the support base which thus takes a position different from a central location with respect to the resulting path.

An object of the present invention is to overcome the above-illustrated inconveniences and limitations of the known devices, and in particular to provide a self-supporting mechanism of simple construction, and consequently of low cost, which is at the same time of flexible use, adaptable to different situations of reduced encumbrance and requiring no fixed installations for its operation. It has been realized that the various paths adopted in the practical cases as above exemplified can advantageously be made to derive in the most cases from an elliptical path, which should preferably be described in any case by the outer end of the second arm, whereby articles can be displaced from one point to another of a fixed preset pattern with a continuous speed variation from a minimum value at the beginning and the end of the displacement up to a maximum value, at an intermediate position.

Therefore it is another object of the present invention to provide a mechanism which, being driven by only one propelling means, is capable to follow with at least the outer end of the second arm a continuous path according to the general equation of an ellipse having its center corresponding with the support base, more precisely the pivoting axis of the first of said arms on said support base.

These objects are achieved with the mechanism as defined by claim 1.

A further object of the present invention is that by a continuous, uniform rotation of three arms a harmonic rectilinear motion can be obtained at the outer end of the third, distalmost arm.

The versatility of the device object of the invention makes easy its use in various fields requiring the rapid transportation of articles along a predetermined path, even with the possibility of rotating the article by a prefixed angle, as well as entering narrow spaces, hardly attainable with traditional devices.

The mechanism according to the invention allows to obtain a broad variety of paths. Furthermore the handling device employs only one propeller, by means of which a number of movements can be obtained and, when the mechanism is withdrawn at half stroke, it shows a very reduced space occupied, in the area of the support base only, whose central position reduces by half the overall cantilever between the outer points of the path to be performed.

These and additional features will become clear, together with the relevant advantages, from the following description of some preferred, non limiting embodiments of the mechanism object of the invention, when taken in combination with the annexed drawings, in which:
FIGURE 1 schematically shows in perspective the construction of a mechanism with three arms according to the invention as a handling device;
FIGURE 2 is a schematic view showing the operation of the mechanism of fig.1;
FIGURE 3 shows a way of using the mechanism according to the invention as a handling device in an assembling system;
FIGURE 4 schematically shows, in a plan view, a particular embodiment of the propeller device by means of a pair of cylinders with fluid under pressure;
FIGURE 5 shows a sectional view of a preferred embodiment of the mechanism according to the invention;
FIGURE 5a shows, in a greater scale, the detail of fig.5 referred to as X and encircled by a dotted line;
FIGURES 6-9 show different possible paths performed by the mechanism according to the invention;
FIGURE 10 geometrically shows how to obtain an elliptical path with a mechanism according to the invention; and
FIGURE 11 shows an embodiment of mechanism with two arms, suitable to follow an elliptical path in a vertical plane.

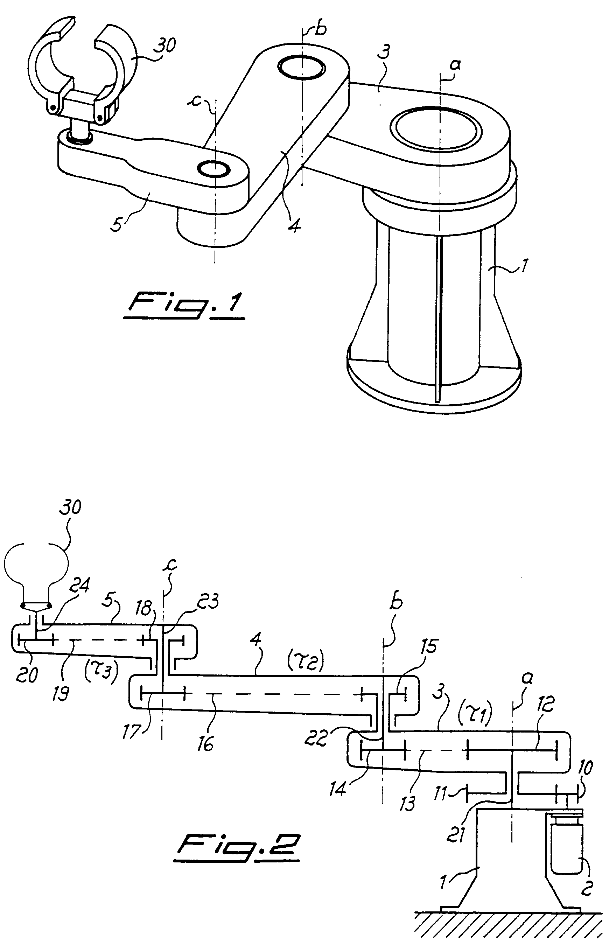

With reference to fig.1, the mechanism according to the invention comprises a support base 1 provided with whichever propeller means, not shown, such as a hydraulic cylinder or an electric motor, and three arms, linked to each other at the ends, respectively 3,4 and 5. The crosswise size or thickness of the three arms are preferably decreasing toward the outside for static reasons and the two ends of each arm are also defined, for the sake of identification, as inner and outer respectively, with inner end being meant the one nearer to axis (a) of the support base 1.

The free end of arm 5 bears a grasping means, such as a simple supporting profile or a clamp 30, and the inner end of arm 3 is connected to base 1. Arms 3,4 and 5 are preferably rotated about mutually parallel axes (a, b, c vertical in the example of fig.1). These rotations are all controlled, with the resulting translation and possible rotation of clamp 30, by the single motor in the base, through transmission means to be described later on.

Reference will be now made to fig.2 schematically showing a longitudinal section of an embodiment, again with three arms, of the mechanism and wherein the same numeral references of fig.1 have been used for the same or substantially equivalent parts.

A propelling means is mounted on the support base 1, at an outer position, which consists of an electrical motor 2 the shaft of which drives a toothed wheel 10 meshing with a gear 11 which is integral with the first arm 3 having an end rotatably coupled to said support. Therefore arm 3 can rotate about axis (a) upon actuation of said motor means 2.

In the description reference will be made to transmission devices based on toothed wheels and chains, or on belts and pulleys, also toothed, but it is clear that other equivalent transmission devices can be used without therefore exceeding the scope of the invention.

The second arm 4 has its inner end rotatably coupled to the other end (outer) of said first arm 3. The second arm 4 is caused to rotate with respect to the first arm 3 by a first transmission means 13, consisting e.g. in a toothed belt wound around toothed wheels 12 and 14, positioned at the two ends, respectively inner and outer, of the first arm 3.

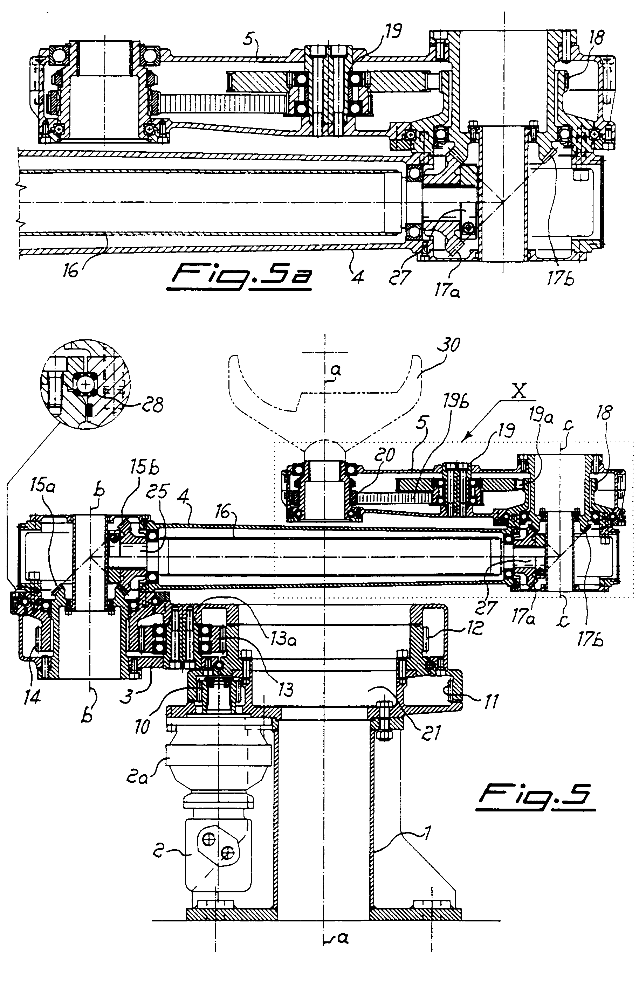

The toothed wheel 12 with axis (a) is mounted on a short vertical shaft 21, fixedly mounted at its lower portion to the base 1 and is linked through belt 13 to a second toothed wheel 14. This latter, with axis b, is mounted at the end of a short vertical shaft 22 having the other end integral with the body of the second arm 4. Shafts 21 and 22 are coincident with the rotation axes respectively a,b of the first and the second arm. The first of these axes is stationary, whereas the second moves together with the outer end of arm 3 thus following a circular path. As schematically shown in fig.2, these axes may pass through sleeves formed at the arm ends or the construction may be different, such as that represented in figs.5 and 5a.

For the first transmission means a transmission ratio τ1 is defined, where τ1 is the ratio between the number of teeth of the two gears. It is clear that when using different transmission devices, as reported in the following, ratio τ1 is defined more in general as the ratio between two angular velocities, such as of the toothed wheel 11 (and consequently of the first arm 3) and of the second arm 4 with respect to the first one.

The third arm 5 has its inner end rotatably linked to the other end (the outer one) of the second arm 4 and the outer end of arm 5 is provided with a clamp 30 or any other support device providing the grasping means.

The third arm 5 is caused to rotate with respect to the second arm 4 by a second transmission means 16 formed of a belt being wound around two toothed wheels 15,17 provided at either ends of the second arm. Wheel 15 is axially holed to allow a short shaft or hub 22 to pass and is integral with the outer end of arm 3. Toothed wheel 17 is mounted at the end of a short shaft or hub 23 (coincident with axis c) the other end of which is integral with the inner end of the third arm 5. The transmission ratio of this second means is indicated with τ2, which determines the angular velocity of the third arm 5 with respect to the second one.

Finally there is provided a third transmission means 19, formed as a belt and two toothed wheels 18,20 structurally similar to the second transmission means, with ratio τ3. Toothed wheel 20 is mounted at the end of a short shaft or hub 24 the rotation of which with respect to axis c determines the motion of clamp 30 resulting in the space and, if necessary and/or foreseen, according to the value of τ3, also its possible rotation.

By operating the propelling means 2 the first arm 3 is caused to rotate (about axis a) and consequently the toothed wheel 14 is caused to move, being coupled to the second arm 4. Furthermore the rotation of the toothed wheel 14 about its own axis, being driven by belt 13 and toothed wheel 12, according to τ1, causes the rotation of the second arm 4 about axis b, in addition to a revolution movement about axis a. At the same time the rotation of second arm 4 determines the rotation of wheel 17 about its own axis and this, similarly to what already described, causes the rotation of third arm 5 (about axis c) as well as the resulting path of its free end, as already explained, with a translatory motion only of clamp or also a possible rotation about the axis thereof, according to τ3.

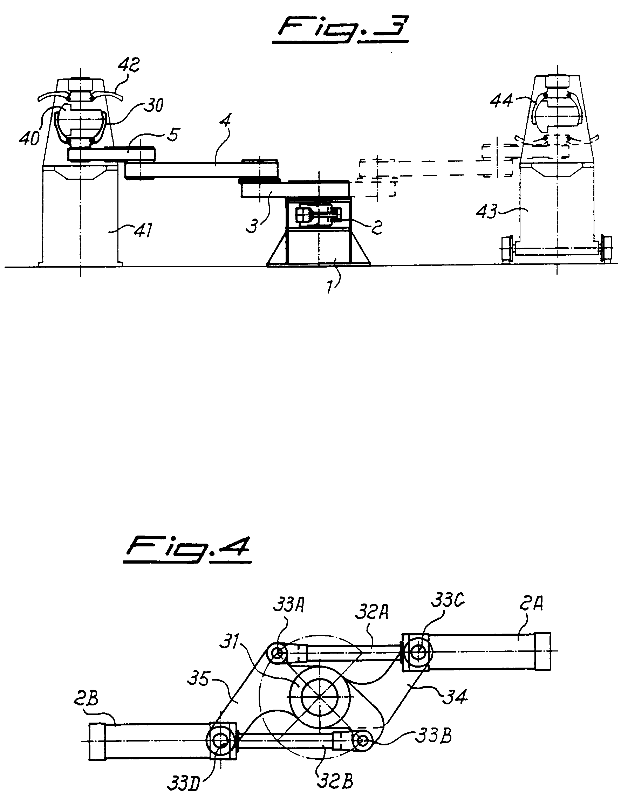

Fig.3 illustrates how the handling device is used to transfer an article 40 from a manufacturing line 41, where the article is hold by a clamp 42, to a conveyor line 43 where the article is taken and transported by a clamp 44. By continuous lines the handling device has been represented with extended arms 3,4 and 5 (not necessary at maximum extension) towards line 41, whereas by broken lines the handling device has been represented with arms 3,4 and 5 extended towards line 43. Although it is preferable, the extension is not necessarily symmetrical in both cases. A cylinder operated by a fluid under pressure has been shown here as propeller means 2.

Furthermore it should be appreciated that, if necessary, during the transfer, article 40 could undergo a rotation, whereby it can reach a conveyor line 43 rotated by n degrees with respect to the position at which it has been taken from line 41.

As illustrated in figs.1-3, arms 3,4,5 are preferably formed as elongated closed bodies at the inside of which the corresponding transmission devices are positioned. This solution is preferable for various reasons, in particular to protect the transmission devices against dust, moisture and other damaging substances, as well as to reduce its encumbrance and for safety reasons in favour of the personnel, however different solutions could be adopted, which one skilled in the art will be able to easily find each time for particular cases.

Fig.4 shows an alternative embodiment of the handling device in which the propelling means is formed as a pair of cylinders (hydraulic or pneumatic) 2A, 2B, both provided with pistons 32A, 32B respectively, hinged to levers 34,35 in 33A-33D, thus imparting the necessary bidirectional rotation to a motor shaft 31. By using double action cylinders it is possible to obtain the movement with a single cylinder and a suitable driving device.

Figs.5 and 5a clearly show a preferred embodiment of the linkages between the arms.

In figs.5 and 5a parts corresponding or similar to those of already described embodiments bear the same numeral references. Propelling means 2 is in this case a hydraulic motor, co-axial with an epicylic speed reduction gear at the outlet of which there is integrally mounted a pinion 10 for engagement with a gear 11 with internal toothing, integral with the first arm 3 and co-axial with the rotation axis a thereof. Also co-axial with a and fixed to the base 1 by means of the structure 21 there is also mounted the toothed wheel 12. The second toothed wheel 14 is mounted at the inner end of arm 3, about the rotation axis b of the second arm 4, integrally with arm 4 itself, like in the embodiment of fig.2. The first transmission means 13 between the two wheels 12,14 is provided in this case by an idle gear, being rotatable on an axis 13a which is integral to said first arm 3.

Again co-axially with axis b and integral to the first arm 3 there is provided a first bevel gear 15a meshing with a second bevel gear 15b which is rigidly connected through a shaft 16 along the second arm 4, with another bevel gear 17a in the proximity of the outer end of said second arm 4. Another bevel gear 17b is in meshing engagement with 17a and integrally mounted to the third arm 5 for rotating about the rotation axis c of the latter at the inner end thereof. Also co-axially with c, integrally with the second arm 4, there is mounted the other toothed wheel 18 which in this case is connected to the most external toothed wheel 20, at the end of third arm 5, through a transmission means 19 provided as a speed reducing gear. The drive between the reducing gears 19 and the toothed wheels 18 and 20 is provided e.g. by means of toothed belts 19a and 19b respectively. By using the reducing gear 19 it is possible to modify the transmission ratio τ3 and consequently to bring rotation variations in the axis of wheel 20, i.e. the so-called "wrist" of the mechanism, on which the grasping means 30 is mounted.

From the above the constructional variations with respect to the embodiment described with reference to fig.2 are self-evident, but it will be appreciated that these embodiments are perfectly equivalent, the transmission ratios τ1, τ2, τ3, being determined in any case by the ratio between the diameters or number of teeth shown by the gears, toothed wheels, bevel gear pairs or the like being present at the inner and outer ends of each arm, with possible variations on τ3 due to the presence of speed reduction gear 19.

Additionally it will be noted that operation by means of a hydraulic motor, as here assumed, allows the mechanism to carry out continuous rotations or alternate motions in a relatively simple way. Furthermore, on one of the bevel gears of each pair, and namely on 15b and 17a, a friction locking unit is applied, also called "adaptor", respectively 25,27 in order to phase the arms each other, mainly to set the reciprocal positions for varying the eccentricity of the resulting elliptical motion (see the following description with reference to fig.10).

The consequence is that the movement of arms is provided by rigid transmission devices, whereas the "wrist" or axis of the grasping means 30, coincident with toothed wheel 20, is driven by toothed belts. The size of said most external toothed wheel 20 or "wrist" is also advantageously reduced by adopting the speed reducing gear 19, since the most suitable transmission ratio τ3 can be obtained through an intervention onto the reducing gear itself rather than on the relative size ratios between gears 18,20. From figs.5, 5a is also clear that the arm linkages are mutually joined through pre-loaded step boxes having radial, axial and anti-tilting functions (see enlarged detail 28).

In the embodiment of figs.5 and 5a there are additionally provided some advantageous possibilities, such as that of allowing the passage of rotating connectors through the arm linkages in order to lead to the wrist, i.e. the means 30, electrical, hydraulic and pneumatic feedings, even with continuously rotating arms. Through the support 1 it is also possible to enter with a column suitable as a guide for the whole mechanism in view of a possible vertical movement preferably driven by a hydraulic cylinder, and if it is the case, in replacement of the support 1 itself a differential gear can be applied, being operated by a second motor, in addition to the propeller means 2, thus obtaining two driven axes, with a solution which can be particularly advantageous in case of a remarkable extension of the arms, throughout a broad working area.

Finally it will be appreciated that in fig.5 the second arm length has been made as twice the length of the first and third arms, which are equal. With these size ratios the rotation of arm 4 occurs always about its middle point with a consequent reduced moment of inertia.

The path along which the grasping means moves can be of various types and is defined through the choice of the transmission ratios τ1 and τ2, beyond the relative length of arms.

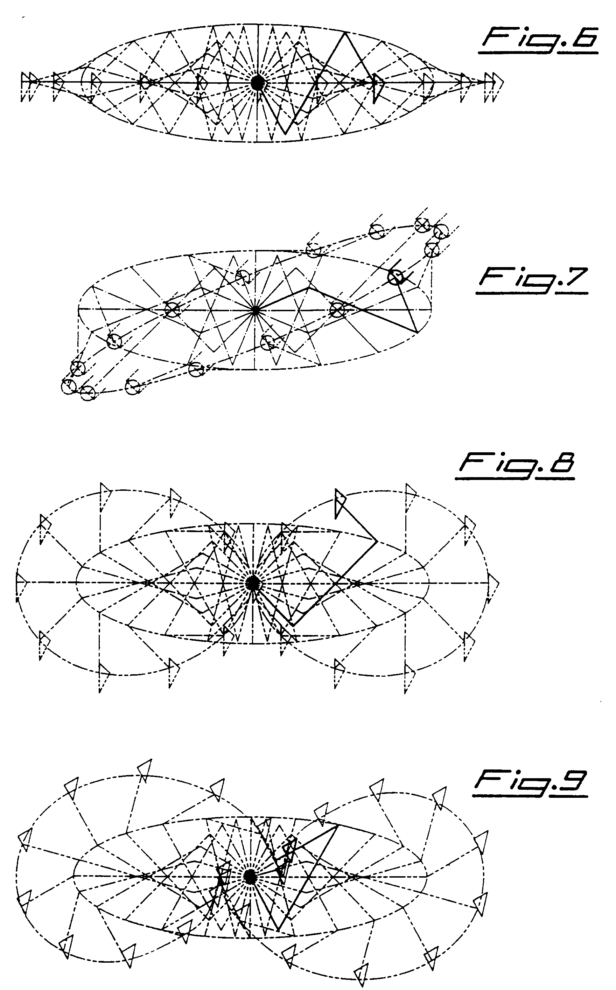

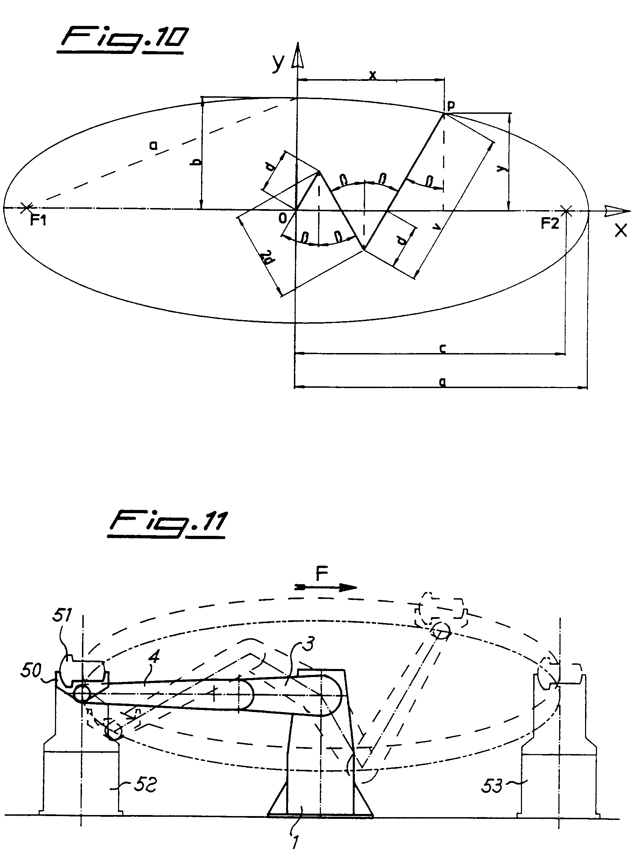

In general curved paths are obtained which, according to the number of arms of the mechanism, can widely vary from each other. While axis a follows always a circumference, axis b at the end of the second arm describes in almost all the cases an ellipse, as it appears from the broken lines of figs.6-9. In the embodiments with three arms, where at the free end of the third arm (wrist) there is mounted a grasping means, the most varied paths may be had, from the rectilinear one of fig.6, performing a linear harmonic motion, to the elliptical shape with angled axes with respect to the ellipse described by the second arm end (see fig.7) to that of the double-ovoidal shape with central knot, referable to a crossed ellipse (fig.8), which could also lead to paths with more crossing points, thus forming trilobate curves, or cyclic paths like in fig.9. The parameters to obtain all these types of paths (even more complex ones could be obtained with a greater number of arms) are still the ratio between the length of various arms, the associate transmission ratio and the mutual spatial relationship between the arms themselves.

Particularly important is the rectilinear harmonic motion path of fig.6, with which the mechanism cam be used in the field of long straddle feeds with a reduced number of errors in repetitions, as it can be inserted e.g. as a mechanism for the reciprocating movement of the saddle of a planer or other machine tool.

On the other hand, with curved paths, the body being carried can be guided along curve ways, with considerable frequences and by exploiting the possibility of avoiding obstacles or the like, so as to be inserted exactly at a prefixed point at the end of the stroke and in the desired orientation.

With reference to fig.10 it is possible to see how an elliptical path can be obtained and therefrom, through a suitable variation of parameters, either a circular or a harmonic rectilinear motion which may be considered as particular cases of an ellipse. When assuming two Cartesian axes X and Y having the origin O at the ellipse center, corresponding to axis a of the first arm as considered above, if d is the length of the first arm, 2d that of the second arm and v is pertaining to the third arm, one has as a consequence that the longer axis of the ellipse corresponds to $\text{3d+v=4d+(v-d)}$, where v-d is equal to the shorter axis b and at any moment the abscissa xₚ of a point P on the path, associate to the position of a transported article is equal to ${\text{x}}_{\text{p}} \text{=[4d+(v-d)] sen β}$ ,where β is the semi-angle comprised between the arms, when assuming that the triangles ideally generated by the arms with axis X are all isosceles. Then another consequence is that the ordinate yₚ of point P, is equal to:${\text{y}}_{\text{p}} \text{=(v-d) cosβ.}$

The general equation of an ellipse, as it is known, is given by:$\frac{{\text{X}}^{\text{2}}}{{\text{a}}^{\text{2}}} \text{+} \frac{{\text{y}}^{\text{2}}}{{\text{b}}^{\text{2}}} \text{= 1}$ and, if the above-indicated values for coordinates of point P are replaced, it is obtained:$\frac{{\text{[4d+(v-d)]}}^{\text{2}} {\text{senβ}}^{\text{2}}}{{\text{[4d+(v-d)]}}^{\text{2}}} \text{+} \frac{{\text{(v-d)}}^{\text{2}} {\text{cosβ}}^{\text{2}}}{{\text{(v-d)}}^{\text{2}}} {\text{= senβ}}^{\text{2}} {\text{+ cosβ}}^{\text{2}} \text{= 1,}$ which is a result well-known geometrically. Therefore the ellipse equation is satisfied and this is a comfirmation that the point actually describes an elliptical path in which the eccentricity $\text{e=c/a < 1}$, where$\text{c=} \sqrt{{\text{a}}^{\text{2}} {\text{- b}}^{\text{2}}} \text{.}$ It results therefrom that for $\text{v-d=0}$, i.e. if the third arm has the same length as the first one, equal to one half of the second arm length, one has e=1 and the ellipse flattens so as to become a straight line coincident with axis X. The resulting movement is thereby a harmonic rectilinear motion. When a=b, the consequence is e=0 and a circular path.

With reference to fig.11 a mechanism according to the invention is shown, having only two arms, the elliptical path of which develops in a substantially vertical plane. As a matter of fact in this case, contrary to all the embodiments previously shown, the arm axes are horizontal. The system requires a balancing of the loads and allows the transfer of an article 51, represented in the drawing as mushroom-shaped, in particular resting on a support profile 50 moving while keeping a constantly horizontal orientation, without any interference at catch and release stations 52 and 53 respectively, if the rotation occurs in the direction shown by arrow F. It should also be appreciated that, thanks to a well-known physical law, along the elliptical path originated by a uniform circular motion, the instant speed of the article 51 is subject to a continuous variation. Such a speed has its lowest value at the point where the article is caught and released respectively, and the highest value at the middle (in other words it is inversely proportional to the distance from the ellipse center).

As already mentioned above, any transmission means can be provided by a different device with respect to those illustrated, such as plane belts, chains, gears, racks, steel strips, metal and non-metal ropes, levers or also combinations of these elements among them.

With reference to the propeller means, this can be either an electric motor, of the d.c. or a.c. type, or a hydraulic motor (fig.5) or any other device, for example a cylinder as shown in figs.3 and 4.

It appears clearly the advantage obtained, according to the invention, concerning the possibility of reducing the overall straddle length, as the support of the mechanism is at midway of the stroke to be performed; even more appreciable advantage in case of handling heavy articles.

Although the invention has been described with reference to particular and preferred embodiments, especially a handling device, it should not be considered restricted to such a description, but it is meant to be extended to include additional variations and modifications which are within the scope of the invention as defined by the claims, only some of which have been indicated previously by way of example without going through all the possibilities of the invention. In particular, when using certain special types of motor means, known in the art, intermediate points of stop can be determined at pre-fixed stations along the paths which will be chosen at each time according to the requirements.

## Claims

1. A mechanism for moving articles along prefixed paths, comprising a support base (1) provided with a motor means (2) and at least two arms (3,4;5) with respective rotation axes (a,b;c), each of said arms having an inner end proximal to said support (1) and an outer end distant therefrom, in which the inner end of each arm is pivotally attached to the outer end of the contiguous arm nearer to said support, the inner end of the first, proximalmost arm (3) being pivotally attached to said support (1) for being rotated by said motor means (2) and the last, distalmost arm (4;5) having its free end provided with a grasping means (30); transmission means (13,16;19) being provided respectively at the inside of each arm (3,4;5) with respective transmission ratios (τ1,τ2;τ3), causing a relative rotation between that arm and the contiguous outer arm and between the distalmost arm (4;5) and the grasping means (30), the resulting motion of said grasping means (30) along a curved or linear path being determined by said transmission ratios (τ1,τ2;τ3) as well as by the lengths and number of these arms (3,4;5), wherein the length of the second arm (4) is greater than that of the first one (3), and wherein the transmission ratios and the arrangement of the arms and of the grasping means are such as to allow a continuous rotation of the arms, and such that the outer end of the second arm (4) describes a non-linear elliptical path the centre of which coincides with the pivot axis (a) between the first arm (3) and the support (1).

2. A mechanism according to claim 1, comprising three arms(3,4,5), wherein the length of the second arm (4) is twice the length of the first (3) or the third one (5), said first and third arms having the same length, and the path of the grasping means (30) at the outer end of the third arm (5) is obtained through a harmonic rectilinear movement when the said arms (3,4,5) are subjected to a uniform circular motion.

3. A mechanism according to claim 1, wherein the first transmission means (13) comprises a first toothed wheel or pulley (12) integrally mounted through a short vertical shaft (21) to said support base (1) and co-axially with the rotation axis (a) of the said first arm (3), a toothed belt or chain drive means linking said first toothed wheel or pulley (12) to a second toothed wheel or pulley (14) which is co-axial with the rotation axis (b) of said second arm (4) and fixedly mounted to one end of a second vertical shaft (22); the second transmission means (16) comprises a third toothed wheel or pulley (15) fixedly mounted to another end of said second shaft (22), co-axially with said axis (b) and integrally to the second arm (4), a second toothed belt or chain drive means linking said third toothed wheel or pulley (15) to a fourth toothed wheel or pulley (17) which is co-axial with the rotation axis (c) of said third arm (5) and fixedly mounted to one end of a third vertical shaft (23); the third transmission means (19) comprises a fifth toothed wheel or pulley (18) fixedly mounted to another end of said third shaft (23), co-axially with said axis (c) and integrally to the third arm (5), a third toothed belt or chain drive means linking said fifth toothed wheel or pulley (18) to a sixth toothed wheel or pulley (20) which is fixedly mounted to one end of a fourth vertical shaft (24) at the other end of which there is co-axially mounted said grasping means (30).

4. A mechanism according to claim 1, wherein the first transmission means (13) comprises a first toothed wheel (12) integrally mounted to said support base (1) and co-axially with the rotation axis (a) of said first arm (3), a second toothed wheel (14) which is co-axial with the rotation axis (b) of said second arm (4) and integral therewith and an idle gear in between of the toothed wheels (12,14) and meshing therewith; wherein said second transmission means (16) comprises a first bevel gear pair (15) and a second bevel gear pair (17), with said first bevel gear pair (15) comprising a first bevel gear (15a) which is co-axial with said axis (b) and fixedly mounted at the outer end of said first arm (3), and a second bevel gear (15b) in meshing engagement with the first one and connected, without any relative movements, by means of friction locking units or adaptors (25), to an elongated tubular element (16) which is co-axial with the second arm (4), at the outer end of which there is integrally mounted by means of a second adaptor (27) a first bevel gear (17a) of said second pair (17) for the rotation of a second bevel gear (17b).

5. A mechanism according to claim 4, wherein said arms (3,4,5) are in number of three, at the inside of the third one (5) there being provided third transmission means (19), formed as a speed reduction gear for connecting, with a variable transmission ratio, a toothed wheel (18) at the inner end of said third arm (5), being co-axial with its rotation axis (c), and integral with the outer end of said second arm (4), to a toothed wheel (20) at the outer end of said third arm (5), being co-axial with the axis of possible rotation of said grasping means (30), said reduction gear being coupled to said toothed wheels (18,20) by means of toothed belts (19a,19b) respectively; the second bevel gear (17b) of said second bevel gear pair (17) being fixedly mounted at the outer end of said second arm (4) co-axially with the rotation axis (c) of said third arm (5).

6. A mechanism according to claim 4, wherein the arms (3,4,5) are in number of three and the third transmission means (19) in the third arm (5) is a rigid connection similar to the second transmission means (16) in the second arm (4).

7. A mechanism according to claim 4, wherein the arms are in number of two (3,4), with said grasping means (30) mounted at the outer end of said second arm (4) and connected to said second bevel gear (17b) of the second bevel pair (17).

8. A mechanism according to claim 1, wherein said rotation axes (a,b,;c) are vertical.

9. A mechanism according to claim 1, wherein said rotation axes (a,b;c) are horizontal and the arms are balanced for moving in a vertical plane.

10. A mechanism according to claim 8 or 9, wherein the said grasping means (30) is formed as a translating support profile (50) with a constant horizontal orientation for transportation of articles merely resting thereon by gravity.

11. A mechanism according to any of the preceding claims, wherein said axes (a,b;c) are parallel to each other without interference with the support base (1), the transmission ratio (τ1) being such that to a rotation β of the first arm (3) corresponds a rotation of 2β in the opposite direction of the second arm (4).

12. A mechanism according to any preceding claim, wherein said grasping means (30) is operated by an independent actuating means being fed through connecting elements passing through said arms (3,4;5).

13. A mechanism according to claim 4, wherein anti-tilting rotatory means (28) in the form of pre-loaded step box thrust bearings also having radial and axial anti-tilting functions are provided at the junctions of any two contiguous arms.

## Patentansprüche

1. Mechanismus zum Bewegen von Artikeln entlang vorgegebener Bahnen, aufweisend ein mit einer Motoreinrichtung (2) versehenes Stützgestell (1) und mindestens zwei Arme (3, 4; 5) mit jeweiligen Rotationsachsen (a, b; c), wobei jeder Arm ein zu dem Stützgestell (1) hin gelegenes inneres Ende und ein davon entfernt gelegenes äußeres Ende aufweist, wobei das innere Ende jedes Arms drehbar mit dem äußeren Ende des näher an dem Stützgestell befindlichen angrenzenden Armes verbunden ist, wobei das innere Ende des ersten, nächstgelegenen Armes (3) drehbar mit dem Stützgestell (1) für eine Rotation durch die Motoreinrichtung (2) angebracht ist, und der letzte, äußerste Arm (4; 5) an seinem freiem Ende mit einer Greifeinrichtung (30) versehen ist; Getriebeeinrichtungen (13, 16; 19), die jeweils im Inneren jedes Arms (3, 4; 5) mit entsprechenden Übersetzungsverhältnissen (τ1, τ2; τ3) vorgesehen sind und die relative Rotation zwischen diesem Arm und dem angrenzenden äußeren Arm und zwischen den äußersten Arm (4; 5) und der Greifeinrichtung (30) bewirken, wobei die sich ergebende Bewegung der Greifeinrichtung (30) entlang einer gekrümmten oder geraden Bahn von den Übersetzungsverhältnissen (τ1, τ2; τ3) sowie auch von den Längen und der Anzahl dieser Arme (3, 4; 5) bestimmt wird, wobei die Länge des zweiten Arms (4) größer als die des ersten Armes (3) ist, und wobei die Übersetzungsverhältnisse und die Anordnung der Arme und der Greifeinrichtung so sind, daß sie eine kontinuierliche Armrotation erlauben, und so, daß das äußere Ende des zweiten Arms (4) eine nicht-lineare elliptische Bahn beschreibt, deren Mittelpunkt mit der Rotationsachse (a) zwischen dem ersten Arm (3) und dem Stützgestell (1) zusammenfällt.

2. Mechanismus nach Anspruch 1, aufweisend drei Arme (3, 4, 5), wobei die Länge des zweiten Arms (4) das doppelte der Länge des ersten Armes (3) oder des dritten Armes (5) ist, der erste und dritte Arm dieselbe Länge aufweisen, und die Bahn der Greifeinrichtung (30) an dem äußeren Ende des dritten Armes (5) über eine harmonische geradlinige Bewegung erzielt wird, wenn die Arme (3, 4, 5) einer gleichmäßigen kreisförmigen Bewegung unterworfen werden.

3. Mechanismus nach Anspruch 1, wobei: das erste Getriebemittel (13) ein erstes Zahnrad oder eine Zahnriemenscheibe (12) aufweist, die als Einheit über eine kurze vertikale Welle (21) an dem Stützgestell (1) und koaxial zu der Rotationsachse (a) des ersten Arms (3) montiert ist, wobei ein Zahnriemen oder eine Kettenantriebseinrichtung das erste Zahnrad oder die Zahnriemenscheibe (12) mit einem zweiten Zahnrad oder einer Zahnriemenscheibe (14) verbindet, welche koaxial zu der Rotationsachse (b) des zweiten Arms (4) angeordnet und fest auf einem Ende einer zweiten vertikalen Welle (22) montiert ist; das zweite Getriebemittel (16) ein drittes Zahnrad oder eine Zahnriemenscheibe (15) aufweist, die fest an einem anderen Ende der zweiten Welle (22) koaxial zu der Achse (b) und mit dem zweiten Arm (4) ein Einheit bildend montiert ist, wobei ein zweiter Zahnriemen oder eine Kettenantriebseinrichtung das dritte Zahnrad oder die Zahnriemenscheibe (15) mit einem vierten Zahnrad oder einer Zahnriemenscheibe (17) verbindet, weiche koaxial zu der Rotationsachse (c) des dritten Arms (5) angeordnet und fest auf einem Ende einer dritten vertikalen Welle (23) montiert ist; wobei das dritte Getriebemittel (19) ein fünftes Zahnrad oder eine Zahnriemenscheibe (18) aufweist, die fest an einem anderen Ende der dritten Welle (23) koaxial zu der Achse (c) und mit dem dritten Arm (5) eine Einheit bildend montiert ist, wobei ein dritter Zahnriemen oder eine Kettenantriebseinrichtung das fünfte Zahnrad oder die Zahnriemenscheibe (18) mit einem sechsten Zahnrad oder einer Zahnriemenscheibe (20) verbindet, welche fest auf einem Ende einer vierten vertikalen Welle (24) montiert ist, an deren anderem Ende die Greifeinrichtung (30) koaxial montiert ist.

4. Mechanismus nach Anspruch 1, wobei: das erste Getriebemittel (13) eine erste Zahnriemenscheibe (12) aufweist, die mit dem Stützgestell (1) eine Einheit bildend und koaxial zu der Rotationsachse (a) des ersten Arms (3) montiert ist, ein zweites Zahnrad (14), welches koaxial zu der Rotationsachse (b) des zweiten Arms (4) angeordnet ist und damit eine Einheit bildet, und ein Zwischenzahnrad zwischen den Zahnrädern (12, 14) und im Eingriff mit diesen; das zweite Getriebemittel (16) ein erstes Kegelradpaar (15) und ein zweites Kegelradpaar (17) aufweist, wobei das erste Kegelradpaar (15) ein erstes Kegelrad (15a), welches koaxial zu der Achse (b) angeordnet und fest auf dem äußeren Ende des ersten Arms (3) montiert ist, und ein zweites Kegelrad (15b) in Eingriff mit dem ersten und verbunden ohne jede Relativbewegungen mittels Reibschlußeinheiten oder Adapter (25) mit einem langgestreckten rohrförmigen Element (16) aufweist, welches koaxial zu dem zweiten Arm (4) angeordnet ist, an dessen äußeren Ende damit eine Einheit bildend mittels eines zweiten Adapters (27) ein erstes Kegelrad (17a) des zweiten Paars für die Rotation eines zweiten Kegelrades (17b) montiert ist.

5. Mechanismus nach Anspruch 4, wobei: die Anzahl der Arme (3, 4, 5) gleich drei ist, wobei an der Innenseite des dritten Armes (5) ein drittes Getriebemittel (19) vorgesehen ist, die als ein Geschwindigkeitsreduktionsgetriebe (19) ausgebildet ist, um mit einem variablen Übersetzungsverhältnis ein Zahnrad (18) an dem inneren Ende des dritten Arms (5), das koaxial zu der Rotationsachse (c) und eine Einheit mit dem äußeren Ende des zweiten Arms (4) bildend angeordnet ist, mit einem Zahnrad (20) an dem äußeren Ende des dritten Arms (5) zu verbinden, das koaxial zu der Achse einer möglichen Rotation der Greifeinrichtung (30) angeordnet ist, wobei das Reduktionsgetriebe mit den Zahnrädern (18, 20) mittels Zahnriemen (19a, 19b) verbunden ist; das zweite Kegelrad (17b) des zweiten Kegelradpaares (17) fest an dem äußeren Ende des zweiten Armes (4) koaxial zu der Rotationsachse (c) des dritten Arms (5) befestigt ist.

6. Mechanismus nach Anspruch 4, wobei die Anzahl der Arme (3, 4, 5) gleich drei ist, und das dritte Getriebemittel (19) in dem dritten Arm (5) eine feste Verbindung ähnlich der zweiten Übertragungseinrichtung (16) in dem zweiten Arm (4) ist.

7. Mechanismus nach Anspruch 4, wobei die Anzahl der Arme (3, 4) gleich zwei ist, die Greifeinrichtung (30) an dem äußeren Ende des zweiten Arms (4) befestigt und mit dem zweiten Kegelrad (17b) des zweiten Kegelradpaares (17) verbunden ist.

8. Mechanismus nach Anspruch 1, wobei die Rotationsachsen (a, b; c) vertikal sind.

9. Mechanismus nach Anspruch 1, wobei die Rotationsachsen (a, b; c) horizontal sind und die Arme für eine Bewegung in einer vertikalen Ebene ausbalanciert sind.

10. Mechanismus nach Anspruch 8 oder 9, wobei die Greifeinrichtung (30) als ein Übergabehalteprofil (50) mit einer konstanten horizontalen Ausrichtung für den Transport von Artikeln ausgelegt ist, welche lediglich aufgrund der Schwerkraft darauf ruhen.

11. Mechanismus nach einem der vorhergehenden Ansprüche, wobei die Achsen (a, b; c) zueinander parallel ohne Überschneidung mit dem Stützgestell (1) sind, und das Übersetzungsverhältnis (τ1) so ist, daß eine Rotation β des ersten Arms (3) einer Rotation von 2β des zweiten Arms (4) in der entgegengesetzten Richtung entspricht.

12. Mechanismus nach einen der vorstehenden Ansprüche, wobei die Greifeinrichtung (30) von einer unabhängigen Betätigungseinrichtung betrieben wird, welche über Verbindungselemente gespeist wird, die durch die Arme (3, 4; 5) hindurchtreten.

13. Mechanismus nach Anspruch 4, wobei Anti-Kipp-Rotationseinrichtungen (28) in der Form vorgespannter Stufengehäuse-Drucklager, die auch radiale und axiale Anti-Kipp-Funktionen aufweisen, an den Verbindungen von jeweils zwei angrenzenden Armen vorgesehen sind.

## Revendications

1. Mécanisme destiné à déplacer des articles suivant des trajectoires prédéterminées, comprenant une embase de support (1) munie de moyens formant moteur (2) et d'au moins deux bras (3, 4 ; 5) conportant des axes de rotation respectifs (a, b ; c), chacun desdits bras ayant une extrémité intérieure proche dudit support (1) et une extrémité extérieure éloignée de celui-ci, dans lequel l'extrémité intérieure de chaque bras est fixée de manière pivotante sur l'extrémité extérieure du bras contigu plus proche dudit support, l'extrémité intérieure du premier bras le plus proche (3) étant fixée de manière pivotante sur ledit support (1) pour être déplacée en rotation par lesdits moyens formant moteur (2), et le dernier bras le plus éloigné (4 ; 5) étant muni, au niveau de son extrémité libre, de moyens de préhension (30) ; des moyens de transmission (13, 16 ; 19) étant prévus respectivement au niveau de l'intérieur de chaque bras (3, 4 ; 5), avec des rapports de transmission respectifs (τ1, τ2, τ3), provoquant une rotation relative entre ce bras et le bras extérieur contigu, et entre le bras le plus éloigné (4 ; 5) et les moyens de préhension (30), le déplacement résultant desdits moyens de préhension (30), suivant une trajectoire linéaire ou incurvée, étant déterminé par lesdits rapports de transmission (τ1, τ2, τ3), ainsi que par les longueurs et le nombre de ces bras (3, 4 ; 5), dans lequel la longueur du deuxième bras (4) est plus grande que celle du premier (3), et dans lequel les rapports de transmission et l'agencement des bras et des moyens de préhension sont étudiés de manière à permettre une rotation continue des bras, et tels que l'extrémité extérieure du deuxième bras (4) décrit une trajectoire elliptique non linéaire, dont le centre coïncide avec l'axe de pivotement (a) entre le premier bras (3) et le support (1).

2. Mécanisme selon la revendication 1, comprenant trois bras (3, 4, 5), dans lequel la longueur du deuxième bras (4) correspond à deux fois la longueur du premier bras (3) ou du troisième bras (5), lesdits premier et troisième bras ayant la même longueur, et la trajectoire des moyens de préhension (30) au niveau de l'extrémité extérieure du troisième bras (5) est obtenue par un mouvement rectiligne sinusoïdal, lorsque lesdits bras (3, 4, 5) sont soumis à un mouvement circulaire uniforme.

3. Mécanisme selon la revendication 1, dans lequel les premiers moyens de transmission (13) comprennent une première roue dentée ou poulie (12), montée de manière solidaire par un arbre de longueur réduite (21) sur ladite embase de support (1) et de manière coaxiale à l'axe de rotation (a) dudit premier bras (3), des moyens d'entraînement en forme de ccurroie crantée ou de chaîne, reliant ladite première roue dentée ou poulie (12) à une deuxième roue dentée ou poulie (14), qui sont coaxiaux à l'axe de rotation (b) dudit deuxième bras (4) et montés de manière fixe à une extrémité d'un deuxième arbre vertical (22) ; les deuxièmes moyens de transmission (16) comprennent une troisième roue dentée ou poulie (15) montée de manière fixe sur une autre extrémité dudit deuxième arbre (22), de manière coaxiale audit axe (b) et de manière solidaire sur le deuxième bras (4), des deuxièmes moyens d'entraînement en forme de courroie crantée ou de chaîne reliant ladite troisième roue dentée ou poulie (15) à une quatrième roue dentée ou poulie (17), qui est coaxiale à l'axe de rotation (c) dudit troisième bras (5) et montée de manière fixe sur une extrémité d'un troisième arbre vertical (23) ; les troisièmes moyens de transmission (19) comprennent une cinquième roue dentée ou poulie (18), montée de manière fixe sur une autre extrémité dudit troisième arbre (23), de manière coaxiale audit axe (c) et de manière solidaire sur le troisième bras (5), des troisièmes moyens d'entraînement en forme de courroie crantée ou de chaîne reliant ladite cinquième roue dentée ou poulie (18) à une sixième roue dentée ou poulie (20) qui est montée de manière fixe sur une extrémité d'un quatrième arbre vertical (24), arbre sur l'autre extrémité duquel sont montés de manière coaxiale lesdits moyens de préhension (30).

4. Mécanisme selon la revendication 1, dans lequel les premiers moyens de transmission (13) comprennent une première roue dentée (12), montée de manière solidaire sur ladite embase de support (1) et de manière coaxiale à l'axe de rotation (a) dudit premier bras (3), une deuxième roue dentée (14) qui est coaxiale à l'axe de rotation (b) dudit deuxième bras (4) et solidaire de celui-ci, et un engrenage tournant fou disposé entre les roues dentées (12, 14) et en prise d'engrènement avec celles-ci ; mécanisme dans lequel lesdits deuxièmes moyens de transmission (16) comprennent une première paire d'engrenages coniques (15) et une deuxième paire d'engrenages coniques (17), ladite première paire d'engrenages coniques (15) comprenant un premier engrenage conique (15a), qui est coaxial audit axe (b) et monté de manière fixe au niveau de l'extrémité extérieure dudit premier bras (β), et un deuxième engrenage conique (15b) en prise d'engrènement avec le premier engrenage conique et raccordé, sans aucun mouvement relatif, par l'intermédiaire d'unités de blocage par friction ou d'adaptateurs (25), à un élément tubulaire de forme allongée (16), qui est coaxial au deuxième bras (4), au niveau de l'extrémité extérieure duquel est monté de manière solidaire, par l'intermédiaire d'un deuxième adaptateur (27), un premier engrenage conique (17a) de ladite deuxième paire (17) pour faire tourner un deuxième engrenage conique (17b).

5. Mécanisme selon la revendication 4, dans lequel lesdits bras (3, 4, 5) sont au nombre de trois, des troisième moyens de transmission (19) étant prévus au niveau de l'intérieur du troisième bras (5), ces moyens se présentant sous la forme d'un train réducteur de vitesse, destinés à raccorder, avec un rapport de transmission variable, une roue dentée (18), située au niveau de l'extrémité intérieure dudit troisième bras (5), disposée coaxiale à son axe de rotation (c), et solidaire de l'extrémité extérieure dudit deuxième bras (4), à une roue dentée (20), située au niveau de l'extrémité extérieure dudit troisième bras (5), disposée coaxiale à l'axe de rotation possible desdits moyens de préhension (30), ledit réducteur étant accouplé auxdites roues dentées (18, 20) par l'intermédiaire de courroies crantées (19a, 19b), respectivement le deuxième engrenage conique (17b) de ladite deuxième paire d'engrenages coniques (17) étant monté de manière fixe au niveau de l'extrémité extérieure dudit deuxième bras (4), de manière coaxiale à l'axe de rotation (c) dudit troisième bras (5).

6. Mécanisme selon la revendication 4, dans lequel les bras (3, 4, 5) sont au nombre de trois et les troisièmes moyens de transmission (19) dans le troisième bras (5) sont constitués par une liaison rigide similaire aux deuxièmes moyens de transmission (16) dans le deuxième bras (4).

7. Mécanisme selon la revendication 4, dans lequel les bras (3, 4) sont au nombre de deux, lesdits moyens de préhension (30) étant montés au niveau de l'extrémité extérieure dudit deuxième bras (4) et raccordés audit deuxième engrenage conique (17b) de la deuxième paire d'engrenages coniques (17).

8. Mécanisme selon la revendication 1, dans lequel lesdits axes de rotation (a, b ; c) sont verticaux.

9. Mécanisme selon la revendication 1, dans lequel lesdits axes de rotation (a, b ; c) sont horizontaux et les bras sont équilibrés pour se déplacer dans un plan vertical.

10. Mécanisme selon la revendication 8 ou 9, dans lequel lesdits moyens de préhension (30) se présentent sous la forme d'un profilé de support à translation (50), ayant une orientation horizontale constante, pour le transport d'articles reposant simplement sur celui-ci par gravité.

11. Mécanisme selon l'une quelconque des revendications qui précèdent, dans lequel lesdits axes (a, b ; c) sont parallèles l'un à l'autre, sans interférence avec l'embase de support (1), le rapport de transmission (τ1) étant tel qu'à une rotation β du premier bras (3) correspond une rotation de 2β dans le sens opposé du deuxième bras (4).

12. Mécanisme selon l'une quelconque des revendications qui précèdent, dans lequel lesdits moyens de préhension (30) sont manoeuvrés par des moyens d'actionnement indépendants actionnés par l'intermédiaire d'éléments de raccordement passant au travers desdits bras (3, 4 ; 5).

13. Mécanisme selon la revendication 4, dans lequel des moyens rotatifs de prévention du basculement (28), se présentant sous la forme de paliers de butée à cage en gradin précontraints, ayant également des fonctions d'empêchement de basculement axial et radial, sont prévus au niveau des jonctions de chaque groupe de deux bras contigus.
